# EUROPEAN PATENT APPLICATION

(11) **EP 3 034 307 A1**
(43) Date of publication of application: **22.06.2016**
(21) Application number: 15194166.3
(22) Date of filing: 11.11.2015
(51) Int. Cl.: B41J 3/407, B41J 11/06

(54) **METHOD AND APPARATUS FOR IMPRINTING COLLARS**

(30) Priority: 18.11.2014 US 201462081199 P; 13.10.2015 US 201514881221
(71) Applicant: Collar Central, LLC, Alliance, OH 44601 (US)
(72) Inventor: Greenberg, Stephen, Las Vegas, NV 89117 (US); Stout, James, Alliance, OH 44601 (US); Sobotka, Ryan, St. Louis, MO 63125 (US)
(74) Representative: Bennett, Adrian Robert J.

(57) **Abstract**

A pet collar imprinting device includes a housing (12) having a printing assembly (60) and a heating assembly (70) thereon. A pet product motion platform assembly (50) carries the pet product, and a hold down assembly engages the pet product on the platform assembly. A drive mechanism moves the platform assembly to the printing assembly and to the heating assembly. A heating assembly drive mechanism moves the heating assembly toward and away from the pet product.

## Description

### CROSS-REFERENCE TO RELATED APPLICATIONS

This application claims priority from U.S. Provisional Application No. 62/081,199 filed on November 18, 2014 the contents of which are incorporated herein by reference.

### FIELD OF THE INVENTION

This invention relates to a kiosk/machine, and its method of operation, for printing directly onto pet collars or the like. More particularly, this invention relates to a collar imprinting kiosk to be used by the public in a commercial environment such as a pet supply store. Most particularly, this invention relates to a method and apparatus for printing various messages and or predetermined symbols onto a collar such as one that would be used by a dog or cat.

### BACKGROUND OF THE INVENTION

Currently, there are no known kiosks available for personalized usage which allow for the printing of indicia on a pet collar or the like. However, there are four different types of kiosks used by the public to mark pet tags, namely, stamping, imprinting, stylus engraving, and laser etching. Each type uses a different type of marking implement to mark a text message or logo or other image (collectively "image") onto a pet tag. Conventional pet tags used in marking kiosks designed for pet tags are flat so as not to interfere with the marking machinery during the marking process.

Marking machines and kiosks come in various shapes and sizes. Some kiosks are designed as public use kiosks. In a public use kiosk, a customer is permitted to approach and operate the kiosk to customize the marking of a particular tag selection from inside the kiosk and cause the machine to mark a pet tag, but the customer cannot manually access the marking implement. An example of a public use kiosk pet tag marking machine is shown and described in U.S. Pat. No. 5,569,003. In operation of the public use product of this patent, the operator inserts a token, purchased from a store, selects a desired pet tag within the kiosk, and enters the desired text message for the tag, and starts the system. The system stores several different shapes of flat, anodized aluminum inventory tags in columns that dispense the tags to tag carriers that move to etching positions. A diamond tipped engraving stylus then scratches the text onto the top surface of the anodized aluminum tag and then dispenses the etched tag to a tag, dispensing tray.

Other known smaller pet tag marking machines, which are not kiosks, allow a trained store employee to place a flat pet tag in a holder within a small desktop engraving machine. The store employee has access to the marking implement and places the pet tag directly below the marking implement in a tag tray. The store employee then enters the text to engrave on the pet tag and causes the engraving machine to engrave the top surface of the pet tag. Such a system is distributed by The Hillman Group of Tempe, Ariz. under the product names VetScribe and PetScribe.

U.S. Pat. No. 6,943,314 describes a method whereby a veterinarian marks a first side of a rabies tag with rabies vaccination information, manually turns the tag over, and then marks the second side of the rabies tag with personal information.

Another desktop pet tag marking kiosk is disclosed in U.S. Pat. No. 6,976,814, which discloses a pet tag marking kiosk that includes hexagonal, round, oval, square or triangular placement pins on the work surface to keep a pet tag from twisting left or right on the work surface.

All of these known public use kiosks only have the ability to mark a text message or other image onto a metal or plastic pet tag. None of the known public use kiosks have the ability to mark a text message or other image onto an animal collar. Thus, there is a need in the art for a kiosk in which a customer is permitted to approach and operate the kiosk to customize the printing of various messages and/or designs onto an animal collar which the customer has previously purchased.

### SUMMARY OF THE INVENTION

It is thus an object of one aspect of the present invention to provide a collar imprinting device which automatically imprints specified indicia onto an animal collar.

It is an object of another aspect of the invention to provide a collar imprinting device, as above, which is readily usable by a customer of a retail establishment.

It is an object of an additional aspect of the present invention to provide a collar imprinting device, as above, wherein the specified indicia is provided by the customer.

It is an object of yet another aspect of the present invention to provide a collar imprinting device, as above, which is in the form of a stand-alone kiosk.

It is an object of a still further object of the present invention to provide a method of printing a customizable message on a pet collar.

These and other objects of the present invention, as well as the advantages thereof over existing prior art forms, which will become apparent from the description to follow, are accomplished by the improvements hereinafter described and claimed.

In general, an apparatus for printing indicia onto a pet product includes a housing. A pet product motion platform assembly which carries the pet product is provided in the housing. A printing assembly is provided in the housing, and a drive mechanism moves the pet product motion platform assembly to the printing assembly.

The apparatus may comprise a heating assembly in said housing. The drive mechanism may move the pet product motion platform assembly to said heating assembly. A heating assembly drive mechanism may move said heating assembly toward and away from the pet product. A platform may carry said pet product motion platform assembly. The apparatus may comprise a platform drive mechanism to move said platform closer to said printing assembly. A hold-down assembly may be adapted to engage the pet product. The apparatus may comprise a pet product hold-down drive mechanism to move said pet product hold-down assembly into engagement with the pet product. The housing may have an automated sliding door. The apparatus may comprise an automated sliding door drive mechanism to open and close said automated sliding door. The pet product motion platform assembly may include at least one clip adapted to be attached to the pet product. The apparatus may further comprise a means to identify and select a proper clip. The housing may be provided with a touchscreen and a viewing window. The apparatus may further comprise a heating assembly, a pet product hold-down assembly, a platform, a platform drive mechanism to move said platform, a heating assembly drive mechanism to move said heating assembly, and a pet product hold-down drive mechanism to move said pet product hold-down assembly; wherein said platform drive mechanism, said pet product motion platform drive mechanism, said heating assembly drive mechanism, and said pet product hold-down drive mechanism are attached to said platform. The apparatus may further comprise a second platform located below said platform; wherein said printing assembly, said platform, and said platform drive mechanism are attached to said second platform. The pet product motion platform assembly may include at least one clip adapted to be attached to the pet product and a cleaning brush which cleans said heating assembly. The pet product hold-down assembly includes a ramp to assure that the pet product hold-down assembly will not prohibit a user from attaching a pet product to the at least one clip of the pet product motion platform assembly.

A method of imprinting a pet product with indicia according to the present invention includes the steps of identifying the indicia to be imprinted on the pet product, moving the pet product into a machine, and imprinting the indicia onto the pet product.

The step of identifying may include the steps of providing a predetermined pet product then confirming that the pet product is the correct pet product for imprinting by the machine, and then using a touchscreen system of the machine to specifically identify the indicia to be imprinted on the pet product. Providing a predetermined pet product may be purchasing a proper pet product. The step of moving may include the steps of opening an automated door of the machine, attaching the pet product onto a pet product motion platform assembly, and closing the automated door. The step of attaching includes selecting from at least one clip of the motion platform assembly, the at least one clip being adapted to be attached to the pet product. After the step of closing, the method may comprise steps of holding down the pet product, then moving of the motion platform assembly to a printing assembly, and then raising the pet product toward the printing assembly. The step of imprinting may include the steps of printing the indicia on the pet product using the printing assembly and then heating the pet product using a heating assembly. After the step of printing, the method may comprise steps of lowering the pet product and moving the motion platform assembly to the heating assembly. The step of heating may include the step of lowering the heating assembly toward the pet product to heat the pet product. After the step of lowering the method may include the steps of raising the heating assembly, moving the motion platform assembly to the automated door, raising the hold-down assembly, and opening the automated door. After the step of opening the automated door, the method may comprise the steps of removing the pet product from the motion platform assembly and closing the automated door.

A pet collar imprinting device made in accordance with the concepts of the present invention is shown by way of example in the accompanying drawings without attempting to show all the various forms and modifications in which the invention might be embodied, the invention being measured by the appended claims and not by the details of the specification.

### BRIEF DESCRIPTION OF THE DRAWINGS

Fig. 1 is a perspective view of the collar imprinting kiosk of the present invention;
Fig. 2 is an elevational view of the backside of the front door of the collar imprinting kiosk of the present invention;
Fig. 3 is a perspective view of the internal operating components of the collar imprinting kiosk of the present invention;
Fig. 4 is an exploded perspective view of the operating components of Fig. 3;
Fig. 5 is a perspective view of the collar fixture plate of the collar imprinting kiosk of the present invention;
Fig. 6 is a perspective view of the collar motion platform assembly and the operating components thereof for the collar imprinting kiosk of the present invention;
Fig. 7 is a perspective view showing the hold-down arm of the collar motion platform assembly in use;
Fig. 8 is a perspective view of the hold-down arm and the specific operating components thereof for the collar imprinting kiosk of the present invention;
Fig. 9 is a side elevational view of the operating components of the collar imprinting kiosk of the present invention during the first step of the printing process;
Fig. 10 is a side elevational view of the operating components of the collar imprinting kiosk of the present invention during the second step of the printing process;
Fig. 11 is a side elevational view of the operating components of the collar imprinting kiosk of the present invention during the third step of the printing process;
Fig. 12 is a perspective view of the upper platform drive assembly that moves the upper platform up and down when needed during the printing process;
Fig. 13 is a side elevational view of the operating components of the collar imprinting kiosk of the present invention during the fourth step of the printing process;
Fig. 14 is a side elevational view of the operating components of the collar imprinting kiosk of the present invention during the fifth step of the printing process; and
Fig. 15 is a perspective view of the specific operating components of the heat platen drive assembly of the collar imprinting kiosk of the present invention.

### DETAILED DESCRIPTION OF ILLUSTRATIVE EMBODIMENTS

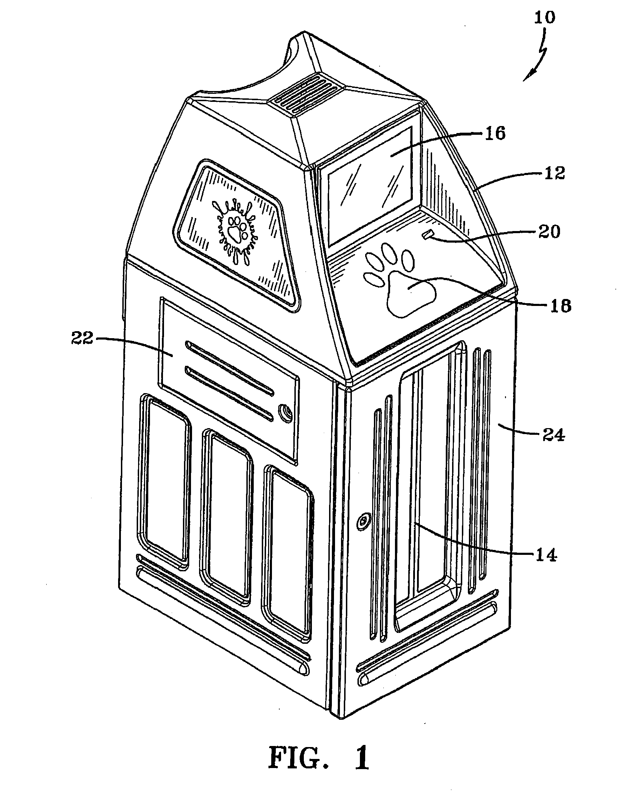

A collar imprinting kiosk made in accordance with the present invention is generally indicated by the numeral 10. The collar imprinting kiosk 10 includes a housing 12 having an automated sliding door 14, a touchscreen 16, a viewing window 18, a barcode reader 20, at least one hinged access side door 22, and one hinged access front door 24 as shown generally in Fig. 1.

The housing 12 can be made from any material such as carbon steel with aluminum weldments, sheet metal, and or a molded plastic material. The housing 12 protects the operating components of the kiosk 10. The automated sliding door 14, as will hereinafter be described in more detail, permits the customer to place their previously purchased collar into the collar imprinting kiosk 10 for printing. The touchscreen 16 is a typical touchscreen display which is operatively associated with a system controller (not shown) such as a computer, which in most embodiments will be located inside the housing 12 behind the touchscreen 16.

In some embodiments, such as the one shown in Fig. 1, the viewing window 18 is located on the front of the housing 12, directly below the touchscreen 16. The viewing window 18 allows the customer to see a portion of the printing process as it occurs within the kiosk 10. The barcode reader 20 is located below the touchscreen 16 next to the viewing window 18, and its purpose is to insure that only the proper animal collars, that is, those that have been purchased and that have the ability to be printed upon, are utilized by the customer. The hinged access doors, 22 or 24, give the owner/operator of the kiosk 10 access to the operating components of the kiosk 10 so that the kiosk 10 may be serviced or cleaned as needed. The hinged access doors, 22 and 24, will be locked at all times so as to ensure that the customer cannot access the operating components of the kiosk 10.

To use the kiosk 10, the customer must first purchase an appropriate collar from the store in which the kiosk is located. Once purchased, the customer would approach the kiosk 10 and press the START button on the touchscreen 16. The touchscreen 16 will then play a video or show an image which describes to the customer the proper way to remove the barcode tag from the collar and how to scan the tag using the barcode reader 20. Once the barcode tag is scanned by the barcode reader 20, an image of the exact collar purchased will be shown on the touchscreen to allow the customer to confirm that the barcode that was scanned was in fact the collar that they purchased. Once confirmed by hitting a YES button on the touchscreen 16, the touchscreen 16 will display a keyboard to allow the customer to type the collar validation code which will be located on the purchase receipt. This step allows the owner of the machine to insure that only collars which were purchased are printed on.

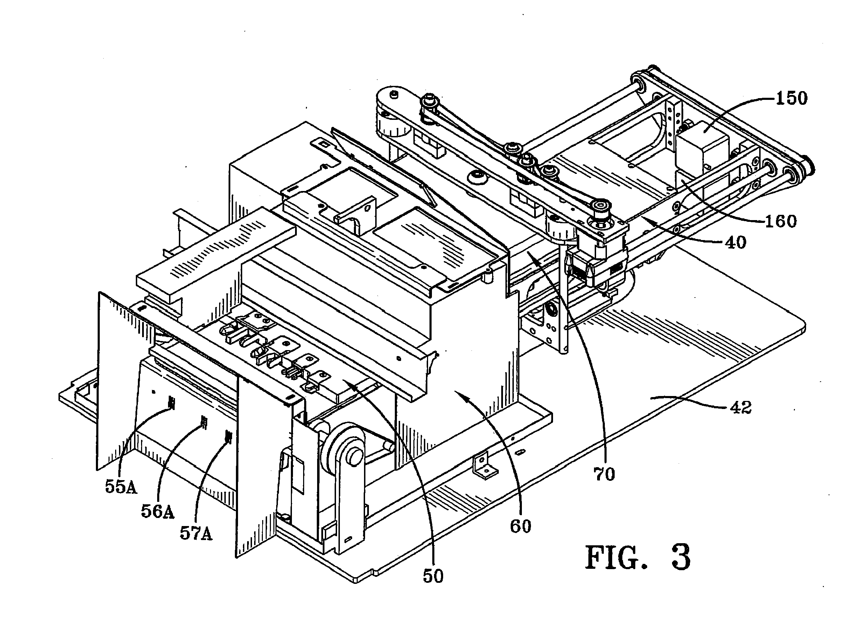

Once the collar validation code is entered and accepted, the automated sliding door 14 will open. The touchscreen 16 will then play a video or show an image which describes the proper way for the customer to clip the collar into the machine for processing. In addition to the video or image shown on the touchscreen, an upper platform 40 carries at its front portion 4 LED style lights 55a, 56a, 57a, and 58a as shown in Fig. 3 (58a is not shown) located under each male collar clasp 55, 56, 57 and 58 on the collar motion platform assembly 50. The 4 LED style lights 55a, 56a, 57a, and 58a will be illuminated in the color red under most condition. However, the LED light 55a, 56a, 57a, or 58a will be illuminated the color green to indicate to the customer which male collar clasp 55, 56, 57 or 58 that the purchased collar should be clipped to.

Once attached, the touchscreen 16 will then show an image of the collar purchased with a text box overlaid on it. The touchscreen 16 will also display a keyboard which allows the customer to enter the desired text to be imprinted onto the collar. The typed text is shown on the overlaid text box to allow the customer to see exactly how it will look printed on the collar. Once the text entry step is complete the customer is presented with an additional screen on touchscreen 16 that allows them to select one of four possible font styles which the text can be printed in. Once selected by the customer, the font style automatically updates on the touchscreen 16 to be reviewed and confirmed. Once the font style has been confirmed, the printing process, as will be hereinafter described in more detail, begins. During the printing process, the touchscreen 16 will display a status bar to show the customer how long they have to wait until their collar is completed. Once the printing process is completed, the automated sliding door 14 will open and the touchscreen 16 will show a message indicating that the printing process is complete and that the collar is ready to be removed from the kiosk 10 by the customer. After a set period of time, a CLOSE DOOR button appears on the touchscreen 16 and allows the customer to hit this button to manually close the automated sliding door 14. If, after a longer set period of time, the CLOSE DOOR button has not been pressed, the automated sliding door 14 will close automatically.

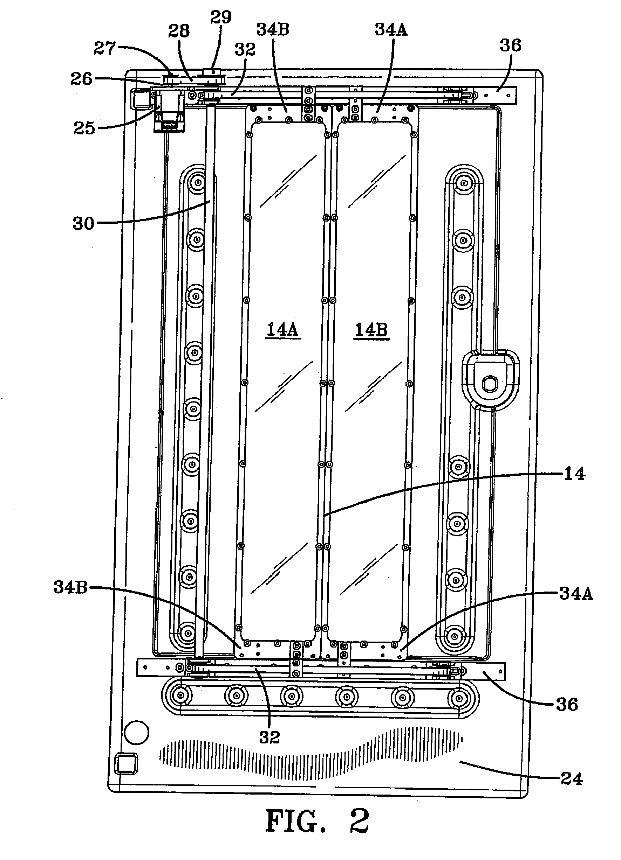

The backside of the hinged front door 24 and the specific operating components of the automated sliding door 14 are shown in Fig. 2. The automated sliding door 14 includes a left sliding door 14a and a right sliding door 14b. To open the sliding door 14, a drive motor 25 rotates a drive motor shaft 26, which in turn rotates a drive pulley 27, which operates on a cog belt 28 which is attached to the drive pulley 27 and a driven pulley 29. Once the drive pulley 27 begins to rotate and operate the cog belt 28, the cog belt 28 rotates the driven pulley 29. The driven pulley 29 is attached to a drive screw 30. The movement of the driven pulley 29 rotates the drive screw 30 which in turn operates on the drive screw cog belts 32 which are attached to the drive screw 30 and each of the door frames 34a and 34b. The drive screw cog belts 32 then are able to move the door frames 34a and 34b towards the outer edges of the hinged front door 24 along the upper and lower door tracks 36.

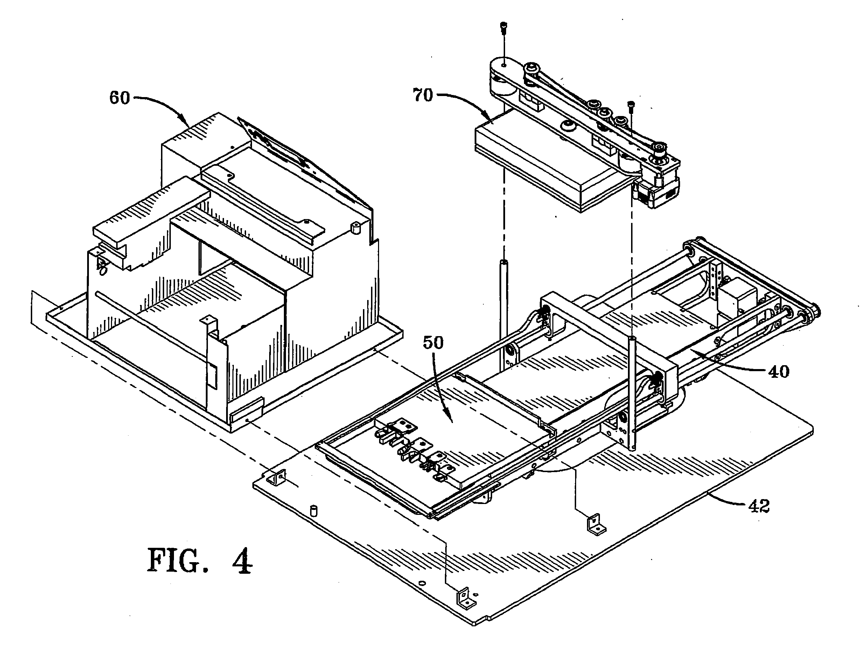

The internal operating components of the kiosk 10 are shown in Figs. 3 and 4 and include an upper platform 40, the collar motion platform assembly 50, a printing assembly 60, and a heating assembly 70. The collar motion platform assembly 50 is carried by the upper platform 40, and a portion of the upper platform 40 is positioned within a portion of the printing assembly 60. The heating assembly 70 is positioned above the upper platform 40. Portions of both the upper platform 40 and the printing assembly 60 are carried by a lower platform 42.

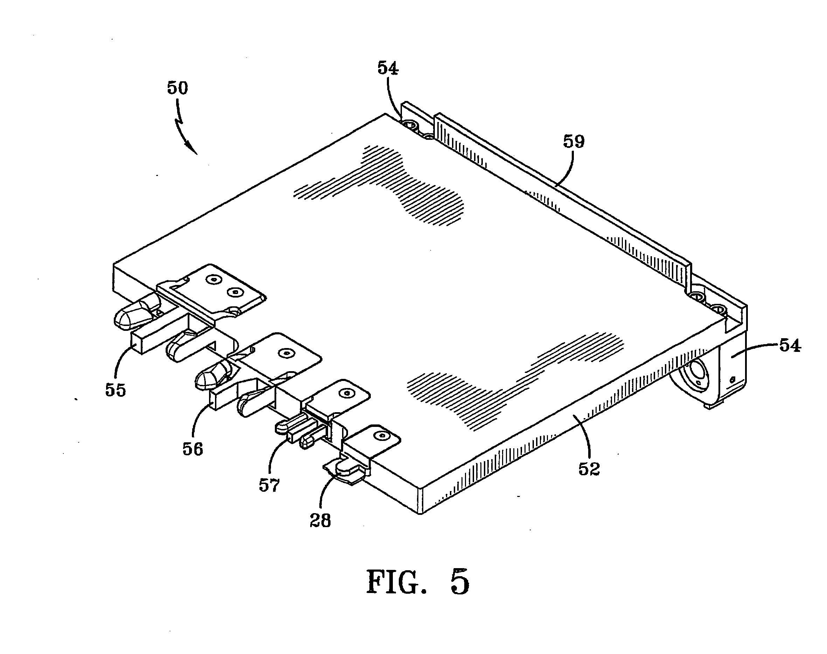

As shown in Fig. 5, the collar motion platform assembly 50 includes a collar fixture plate 52, two drive housing units 54, the plurality of male collar clasps 55, 56, 57, and 58; and a cleaning brush 59. In one embodiment, male clasp 55 is a 1 inch (2.54 cm) in diameter male clasp, male clasp 56 is ¾ inch (1.91 cm) in diameter male clasp, male clasp 57 is a ½ inch (2.54 cm) in diameter male clasp, and male clasp 58 is a break way type male clasp. Male clasps 55, 56, 57, and 58 are used to attach to the corresponding female end of various collars that have the ability to be printed on by the collar imprinting kiosk 10. A cleaning brush 59 is used to clean off the heat platen 71 of the heating assembly 70 as will hereinafter be described in more detail.

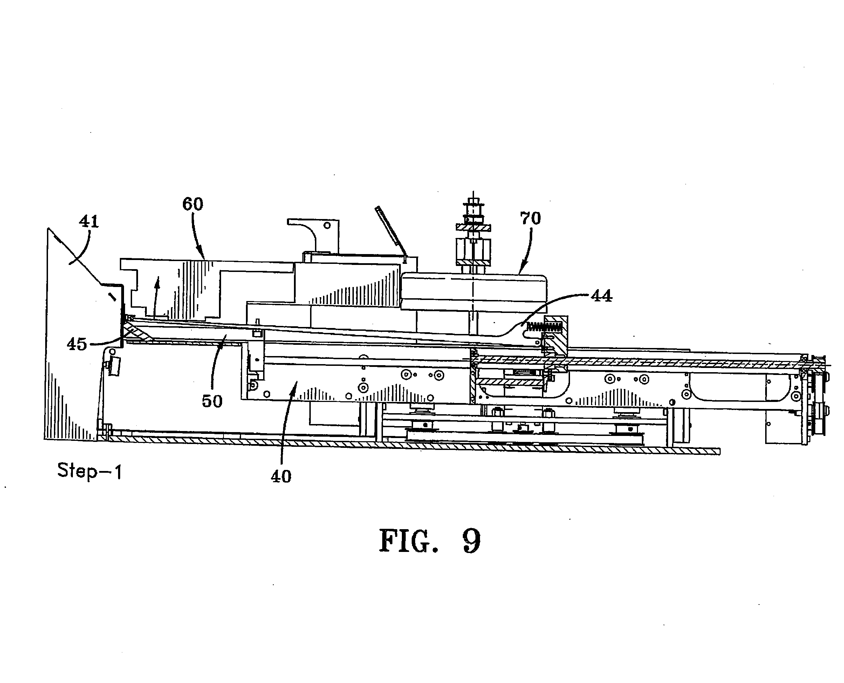

Fig. 9 depicts the location of the internal components during the first step of the printing process. The first step of the printing process begins once the collar validation code has been typed in by the customer and accepted by the kiosk 10. As stated above, once the code has been accepted the automated sliding door 14 will open. Fig. 9 shows what the internal components of the kiosk 10 are doing during this step. The male collar clasps 55, 56, 57, and 58, while available to the customer, are not shown in Fig. 9 because they are hidden behind the protective assembly 41. During this step, the collar motion platform assembly 50 is in its rear most position, closest to the protective assembly 41. Also, during this step, the collar hold-down arm assembly 44, which will be discussed in greater detail below, has been driven forward along the upper platform 40 and up against the hold-down arm ramp 45 so that the hold-down arm assembly 44 will not prohibit the customer from attaching their collar to the appropriate male collar clasp 55, 56, 57, or 58. Furthermore, during this step, the heating assembly 70 is in its upper-most position and the upper platform 40 is in its lower-most position.

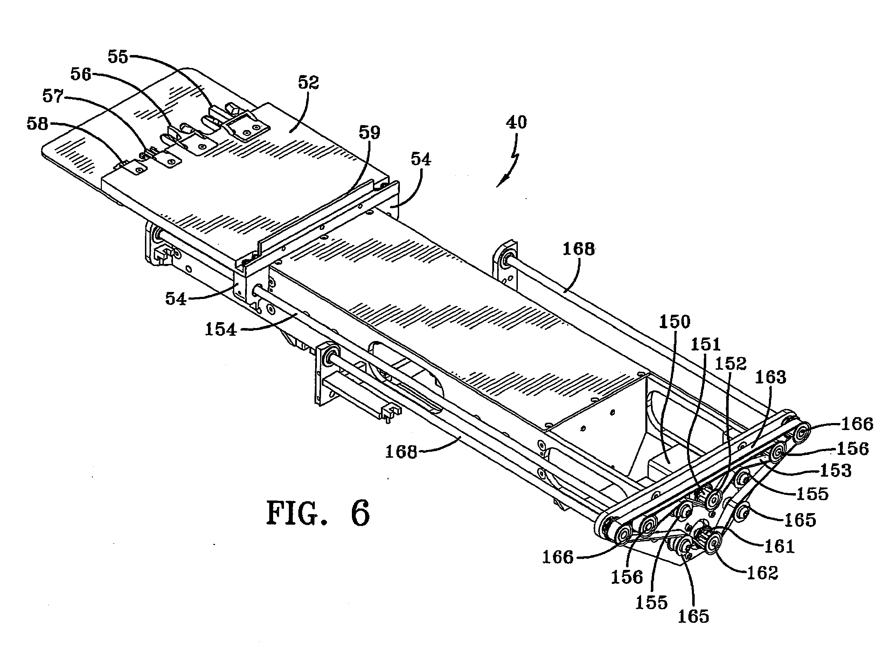

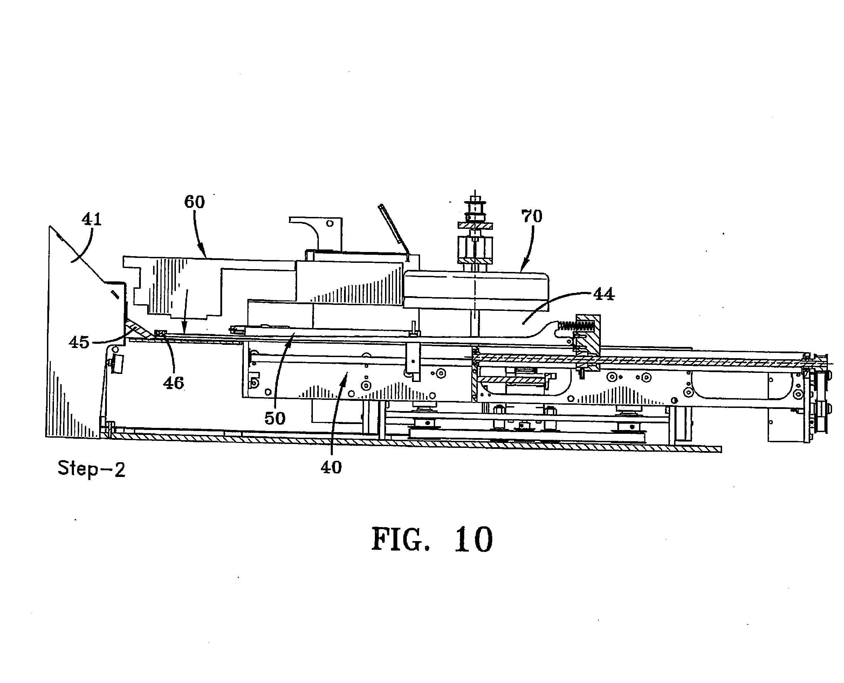

Fig. 6 shows the mechanisms by which the collar motion platform assembly 50 is moved as the components move from the first position as shown in Fig. 9, to the second position as shown in Fig. 10. A drive motor 150 rotates a drive motor shaft 151, which in turn rotates a drive pulley 152, which operates on a cog belt 153 which is attached to the drive pulley 152, two idler pulleys 155, and to two driven pulleys 156. Once the drive pulley 152 begins to rotate and operate on the cog belt 153, the cog belt 153 rotates the two idler pulleys 155 as well as the two driven pulleys 156. The two driven pulleys 156 are attached to two drive screws 154. The movement of the driven pulleys 156 rotates the drive screws 154 which in turn operate on the two drive screw housing units 54 which are threaded onto the two drive screws and which can guide the collar motion platform assembly 50. The two drive screw housing units 54 then are able to guide the collar motion platform assembly 50 as needed throughout the collar printing process.

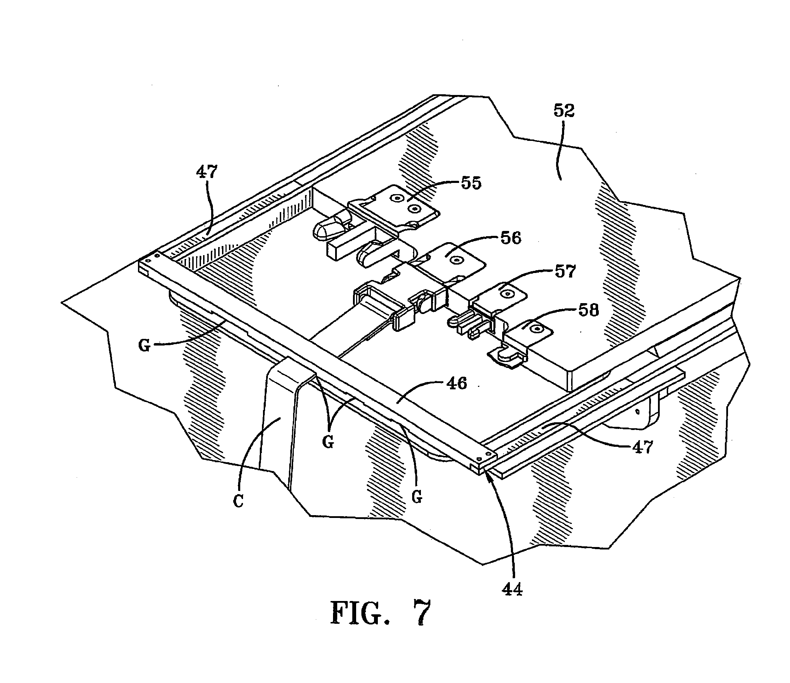

The collar hold-down arm assembly 44 is shown in Fig. 7. Assembly 44 holds down a collar C when attached to a male collar clasp, such as clasp 56. The collar hold-down arm assembly 44 is positioned in front of the collar fixture plate 52 of the collar motion platform assembly 50 and provides both alignment and tension on a collar C when the collar C is moved through the collar imprinting kiosk 10. The collar hold-down arm assembly 44 creates tension on the material of the collar C so that it will lie flat while the collar C moves under the printing assembly 60 and the assembly 44 also provides alignment to make sure that the centerline of the collar C is being run under the printing assembly 60. The assembly 44 includes a hold down bar 46, two connecting arms 47, and two drive housing units 48 attached to a bar 49. The collar hold-down arm assembly 44 is further provided with a plurality of grooves G which are machined into the hold down bar 46. These grooves G correspond to the plurality of male clasps 55, 56, 57, and 58 and the grooves G allow for the hold down bar 46 to fit securely over the collar C when in use so as to provide the necessary alignment and tension on the collar C.

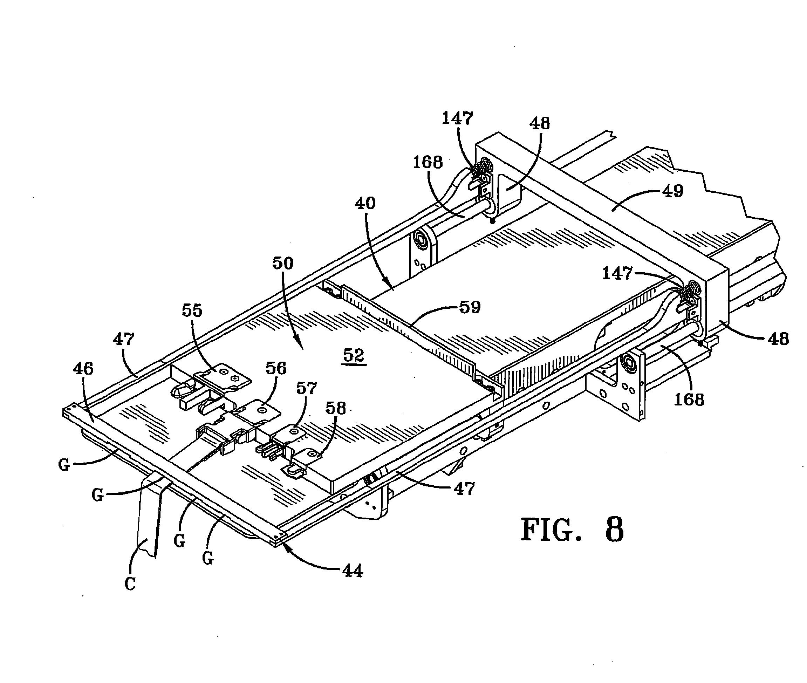

Fig. 8 shows the components which allow for the movement of the hold-down arm assembly 44 as the components move from the first position as shown in Fig. 9, to the second position as shown in Fig. 10. As stated above, the collar hold-down arm assembly 44 includes two drive housing units 48 attached to a bar 49. The two connecting arms 47 are each pivotally mounted on a two drive housing unit 48 and connected to the two drive housing units 48 using springs 147. The springs 147 are compressions springs that push down the hold down arm 46 onto the top of the collar so that there is a tight fit between the hold down arm 46 and the collar. The two drive housing units 48 guide the collar hold-down arm assembly 44 along two drive screws 168. A drive motor 160 rotates a drive motor shaft 161, which in turn rotates a drive pulley 162, which operates on a cog belt 163 which is attached to the drive pulley 162, two idler pulleys 165, and to two driven pulleys 166. Once the drive pulley 162 begins to rotate and operate on the cog belt 163, the cog belt 163 rotates the two idler pulleys 165 as well as the two driven pulleys 166. The two driven pulleys 166 are attached to the two drive screws 168. The movement of the driven pulleys 166 rotates the drive screws 168 which in turn operate on the two drive housing units 48 which are threaded on the two drive screws 168 and also are attached to the bar 49. The two drive housing units 48 then are able to move the collar hold-down arm assembly 44 as needed throughout the collar printing process.

Fig. 10 shows where the internal components are located and what exactly is going on within the kiosk 10 during the second step of the printing process. The second step of the printing process begins with the collar motion platform assembly 50 moving into the kiosk 10 to position the collar C underneath the print head of the printing assembly 60. At the same time as the collar motion platform assembly 50 has been moved into the kiosk 10, as described above the collar hold-down arm assembly 44, will be driven down the hold-down arm ramp 45 so that the hold-down arm assembly 46 will be in position on top of the collar C. During this step, the heating assembly 70 remains in its upper-most position and the upper platform 40 remains in its lower-most position.

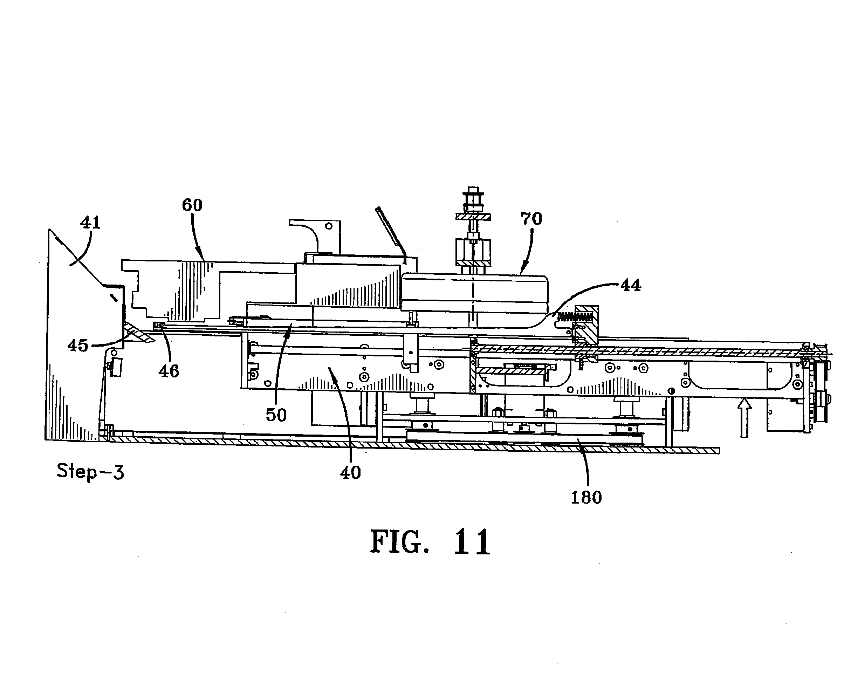

Fig. 11 shows where the internal components are located and what exactly is going on within the kiosk 10 during the third step of the printing process. The third step of the printing process begins with the collar motion platform assembly 50 being in position so that the collar C is underneath the print head of the printing assembly 60 and the collar hold-down arm assembly 44 will be in position on top of the collar C. Next, the upper platform 40 is moved upward by the upper platform drive assembly 180, to be hereinafter described. During this step, the heating assembly 70 remains in its upper-most position. Once the upper platform is moved upwards into place, the actual printing by the printing assembly 60 occurs. The printing assembly 60 can be any conventional printer that has the ability to print onto collars. In one embodiment, the printing assembly 60 is a Ricoh ® 3110DNW Desktop Inkjet Printer.

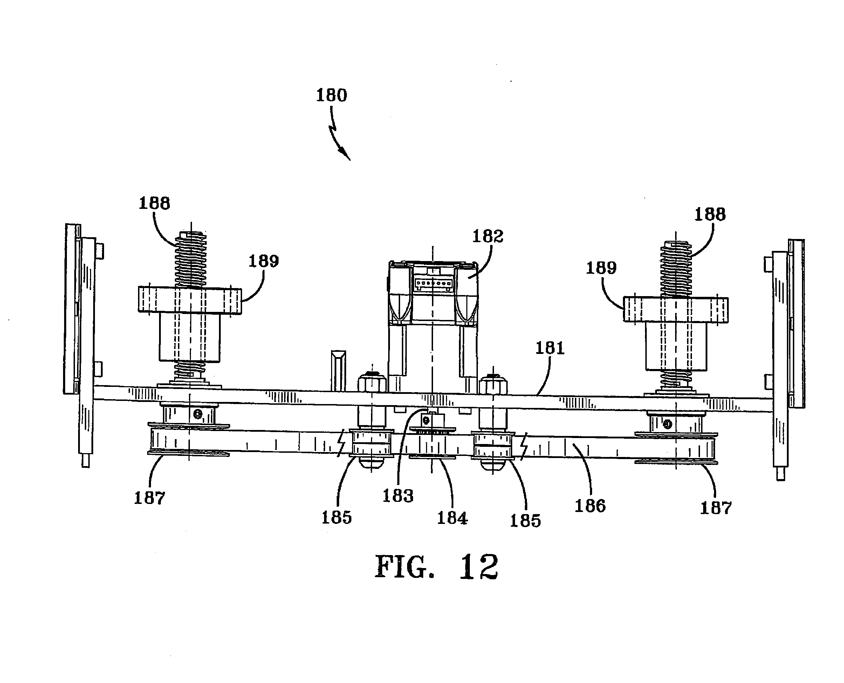

Fig. 12 shows the upper platform drive assembly 180 separated from the rest of the kiosk 10. A upper platform drive motor 182 rotates a drive motor shaft 183, which in turn rotates a drive pulley 184, which operates on a cog belt 186 which is attached to the drive pulley 184, two idler pulleys 185, and to two driven pulleys 187. Once the drive pulley 184 begins to rotate and operate on the cog belt 186, the cog belt 186 rotates the two idler pulleys 185 as well as the two driven pulleys 187. The two driven pulleys 187 are attached to two drive screws 188. The movement of the driven pulleys 187 rotates the drive screws 188 which in turn operate on the two drive housing units 189 which are threaded to receive the drive screws 188. The two drive housing units 189 are bolted stationary to the upper platform and are able to guide the upper platform 40 up and down as needed throughout the collar printing process.

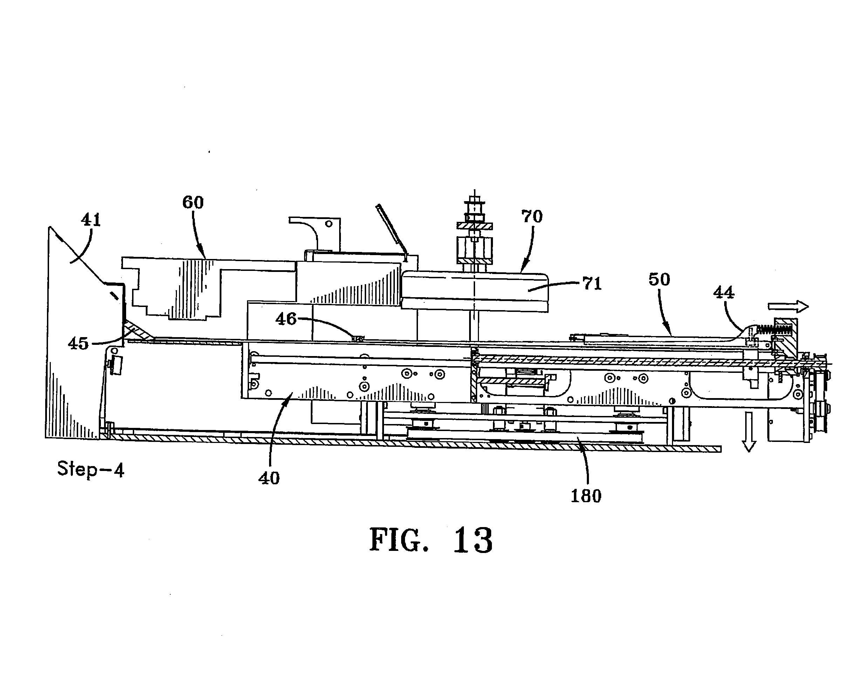

Fig. 13 shows where the internal components are located and what exactly is going on within the kiosk 10 during the fourth step of the printing process. The fourth step of the printing process begins with the upper platform 40 being moved downward by the upper platform drive assembly 180. Then the collar motion platform assembly 50 moves further into the kiosk 10 to position the collar C underneath the heating assembly 70. When the collar motion platform assembly 50 moves further into the kiosk 10, the cleaning brush 59 contacts the bottom face of the heat platen 71. This horizontal motion and contact of the cleaning brush 59 against the heat platen 71 will remove any residual ink left on the bottom face of the heat platen 71 from previous printing processes done by the kiosk 10. At the same time, the collar hold-down arm assembly 44 will also move further into the kiosk 10 so that the collar hold-down bar 46 remains in position on top of the collar C. Finally, during this step, the heating assembly 70 remains in its upper-most position.

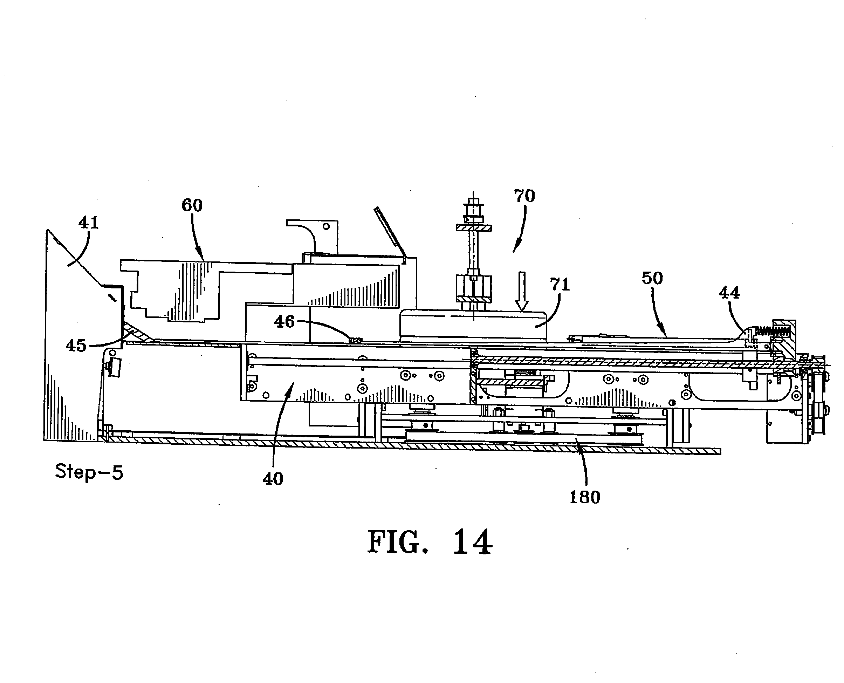

Fig. 14 shows where the internal components are located and what exactly is going on within the kiosk 10 during the fifth step of the printing process. The fifth step of the printing process begins with the collar motion platform assembly 50 being in position so that the collar C is underneath the heat platen 71 of the heating assembly 70 and the collar hold-down bar 46 of the collar hold-down arm assembly 44 will be in position on top of the collar C. Next, the heat platen 71 of the heating assembly 70, discussed in more detail below, moves down onto the collar C. Finally, during the fifth step of the printing process, the upper platform remains in its lower-most position.

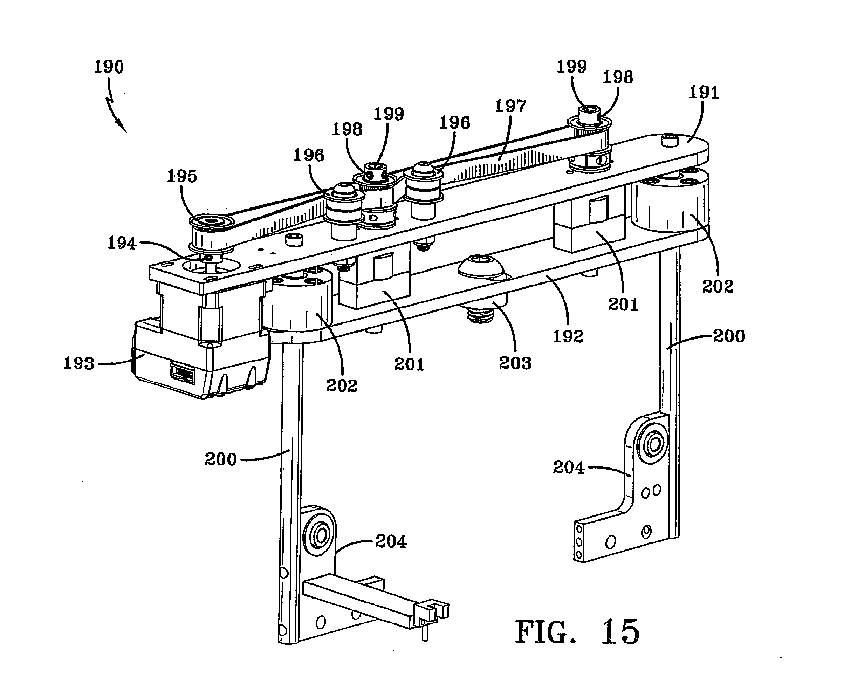

Fig. 15 shows the drive assembly 190 of the heating assembly 70 separated from the rest of the kiosk 10. A drive motor 193 is carried by an upper drive plate 191 and rotates a drive motor shaft 194, which in turn rotates a drive pulley 195, which operates on a cog belt 197 which is attached to a drive pulley 195, two idler pulleys 196, and two driven pulleys 198. Once the drive pulley 195 begins to rotate and operate on the cog belt 197, the cog belt 197 rotates the two idler pulleys 196 as well as the two driven pulleys 198. The movement of the driven pulleys 198 rotates two drive screws 199 which in turn operate on the two drive housing units 201 which are threaded to receive the drive screws 199. The two drive screws 199 and an attachment bolt and spacer 203 help to attach the heat platen 71 (not shown) to a lower drive plate 192. There are also two linear bearings 201 which slide up and down two guide rods 200. The linear bearings 201 and the guide rods 200 help to stabilize the vertical movement of the overall drive assembly 190. Finally, there are two attachment means 204 which are provided to attach the drive assembly 190 to the upper platform 40.

The heat platen 71 can be any conventional heat platen that has the ability to apply heat and pressure onto collars. In one embodiment, the heat platen 71 is a 6 inch (15.24 cm) by 8 inch (20.32 cm) GeoKnight ® DK8-HBA1. During the fifth step of the printing process, the heat platen 71, which at this point has been heated to a temperature of about 400°F (204°c), has been moved vertically down onto the collar C by the drive assembly 190 to apply heat and pressure so as to cure the ink printed onto the collar by the printing assembly 60. The heat platen 71 applies heat and pressure to the collar C preferably for a period of about ten seconds, and once this process is completed, the heat platen 71 is moved vertically away from the collar C by the drive assembly 190. When the heat platen 71 has been lifted off the collar C, the collar C is allowed to cool for a period of about ten seconds, and then the collar C is pulled to the front of the kiosk 10 by the collar motion platform assembly 50. Once the collar motion platform assembly 50 has pulled the collar C to the front of the kiosk 10, the collar hold-down assembly 44 will be lifted off of the collar when the collar hold-down assembly 44 is ramped up the hold down arm ramp 45. The automated sliding door 14 will then slide open, and the customer will be able to remove their collar C from the appropriate male clasp (55, 56, 57, or 58), and at this point the printing process is complete.

In light of the foregoing, it should be appreciated that the present invention significantly advances the art by providing a method and apparatus for imprinting collars that is structurally and functionally improved in a number of ways. While particular embodiments of the invention have been disclosed in detail herein, it should be appreciated that the invention is not limited thereto or thereby inasmuch as variations on the invention herein will be readily appreciated by those of ordinary skill in the art. The scope of the invention shall be appreciated from the claims that follow.

An apparatus and method may be provided as described in the following numbered statements:
1. An apparatus for printing indicia onto a pet product comprising a housing, a pet product motion platform assembly in said housing, said pet product motion platform assembly carrying the pet product, a printing assembly in said housing, and a drive mechanism to move the pet product motion platform assembly to said printing assembly.
2. The apparatus of statement 1, further comprising a heating assembly in said housing.
3. The apparatus of statement 2, wherein said drive mechanism moves the pet product motion platform assembly to said heating assembly.
4. The apparatus of statement 2, further comprising a heating assembly drive mechanism to move said heating assembly toward and away from the pet product.
5. The apparatus of statement 1, further comprising a platform carrying said pet product motion platform assembly.
6. The apparatus of statement 5, further comprising a platform drive mechanism to move said platform closer to said printing assembly.
7. The apparatus of statement 1, further comprising a hold-down assembly adapted to engage the pet product.
8. The apparatus of statement 7, further comprising a pet product hold-down drive mechanism to move said pet product hold-down assembly into engagement with the pet product.
9. The apparatus of statement 1, said housing having an automated sliding door.
10. The apparatus of statement 9, further comprising an automated sliding door drive mechanism to open and close said automated sliding door.
11. The apparatus of statement 1, wherein said pet product motion platform assembly includes at least one clip adapted to be attached to the pet product.
12. The apparatus of statement 11, further comprising a means to identify and select a proper clip.
13. The apparatus of statement 1, wherein said housing is provided with a touchscreen and a viewing window.
14. The apparatus of statement 1, further comprising a heating assembly, a pet product hold-down assembly, a platform, a platform drive mechanism to move said platform, a heating assembly drive mechanism to move said heating assembly, and a pet product hold-down drive mechanism to move said pet product hold-down assembly; wherein said platform drive mechanism, said pet product motion platform drive mechanism, said heating assembly drive mechanism, and said pet product hold-down drive mechanism are attached to said platform.
15. The apparatus of statement 14, further comprising a second platform located below said platform; wherein said printing assembly, said platform, and said platform drive mechanism are attached to said second platform.
16. The apparatus of statement 14, wherein said pet product motion platform assembly includes at least one clip adapted to be attached to the pet product and a cleaning brush which cleans said heating assembly.
17. The apparatus of statement 16, wherein said pet product hold-down assembly includes a ramp to assure that the pet product hold-down assembly will not prohibit a user from attaching a pet product to the at least one clip of the pet product motion platform assembly.
18. A method of imprinting a pet product with indicia using a machine comprising the steps of identifying the indicia to be imprinted on the pet product, moving the pet product into the machine, and imprinting the indicia onto the pet product.
19. The method of statement 18, wherein the step of identifying includes the steps of purchasing a proper pet product, then confirming that the pet product is the correct pet product for imprinting by the machine, and then using a touchscreen system of the machine to specifically identify the indicia to be imprinted on the pet product.
20. The method of statement 19, wherein said step of moving includes the steps of opening an automated door of the machine, attaching the pet product onto a pet product motion platform assembly, and closing the automated door.
21. The method of statement 20, wherein the step of attaching includes selecting from at least one clip of the motion platform assembly, the at least one clip being adapted to be attached to the pet product.
22. The method of statement 21, wherein after the step of closing, holding down the pet product, then moving of the motion platform assembly to a printing assembly, and then raising the pet product toward the printing assembly.
23. The method of statement 22, wherein the step of imprinting includes the steps of printing the indicia on the pet product using the printing assembly and then heating the pet product using a heating assembly.
24. The method of statement 23, wherein after the step of printing, lowering the pet product and moving the motion platform assembly to the heating assembly.
25. The method of statement 24, wherein the step of heating includes the step of lowering the heating assembly toward the pet product to heat the pet product.
26. The method of statement 25, wherein after the step of lowering includes the steps of raising the heating assembly, moving the motion platform assembly to the automated door, raising the hold-down assembly, and opening the automated door.
27. The method of statement 26, wherein after the step of opening the automated door, removing the pet product from the motion platform assembly and closing the automated door.

## Claims

1. An apparatus for printing indicia onto a pet product comprising a housing, a pet product motion platform assembly in said housing, said pet product motion platform assembly carrying the pet product, a printing assembly in said housing, and a drive mechanism to move the pet product motion platform assembly to said printing assembly.

2. An apparatus as claimed in claim 1, further comprising a heating assembly in said housing; and optionally either (i) wherein said drive mechanism moves the pet product motion platform assembly to said heating assembly; or (ii) further comprising a heating assembly drive mechanism to move said heating assembly toward and away from the pet product.

3. An apparatus as claimed in claim 1, further comprising a platform carrying said pet product motion platform assembly; and optionally further comprising a platform drive mechanism to move said platform closer to said printing assembly.

4. An apparatus as claimed in claim 1, further comprising a hold-down assembly adapted to engage the pet product; and optionally further comprising a pet product hold-down drive mechanism to move said pet product hold-down assembly into engagement with the pet product.

5. An apparatus as claimed in claim 1, said housing having an automated sliding door; optionally further comprising an automated sliding door drive mechanism to open and close said automated sliding door.

6. An apparatus as claimed in claim 1, wherein said pet product motion platform assembly includes at least one clip adapted to be attached to the pet product; and optionally further comprising a means to identify and select a proper clip.

7. An apparatus as claimed in claim 1, wherein said housing is provided with a touchscreen and a viewing window.

8. An apparatus as claimed in claim 1, further comprising a heating assembly, a pet product hold-down assembly, a platform, a platform drive mechanism to move said platform, a heating assembly drive mechanism to move said heating assembly, and a pet product hold-down drive mechanism to move said pet product hold-down assembly; wherein said platform drive mechanism, said pet product motion platform drive mechanism, said heating assembly drive mechanism, and said pet product hold-down drive mechanism are attached to said platform; and optionally either
(i) further comprising a second platform located below said platform; wherein said printing assembly, said platform, and said platform drive mechanism are attached to said second platform; or
(ii) wherein said pet product motion platform assembly includes at least one clip adapted to be attached to the pet product and a cleaning brush which cleans said heating assembly; optionally wherein said pet product hold-down assembly includes a ramp to assure that the pet product hold-down assembly will not prohibit a user from attaching a pet product to the at least one clip of the pet product motion platform assembly.

9. A method of imprinting a pet product with indicia using a machine comprising the steps of identifying the indicia to be imprinted on the pet product, moving the pet product into the machine, and imprinting the indicia onto the pet product.

10. A method as claimed in claim 9, wherein said step of moving includes the steps of opening an automated door of the machine, attaching the pet product onto a pet product motion platform assembly, and closing the automated door.

11. A method as claimed in claim 10, wherein the step of attaching includes selecting from at least one clip of the motion platform assembly, the at least one clip being adapted to be attached to the pet product.

12. A method as claimed in claim 11, wherein the step of imprinting includes the steps of printing the indicia on the pet product using a printing assembly and then heating the pet product using a heating assembly.

13. A method as claimed in claim 12, wherein after the step of printing, lowering the pet product and moving the motion platform assembly to the heating assembly.

14. A method as claimed in claim 13, wherein the step of heating includes the step of lowering the heating assembly toward the pet product to heat the pet product.

15. A method as claimed in claim 14, wherein after the step of lowering includes the steps of raising the heating assembly, moving the motion platform assembly to the automated door, raising the hold-down assembly, and opening the automated door; and optionally wherein after the step of opening the automated door, removing the pet product from the motion platform assembly and closing the automated door.
